# EUROPEAN PATENT APPLICATION

(11) **EP 4 772 779 A1**
(43) Date of publication of application: **08.07.2026**
(21) Application number: 24859314.7
(22) Date of filing: 01.08.2024
(51) Int. Cl.: F16K 11/07, F16K 27/04

(54) **CONTROL VALVE**

(30) Priority: 31.08.2023 JP 2023140834
(71) Applicant: KYB Corporation, Minato-ku, Tokyo 105-5128 (JP)
(72) Inventor: FUKUSHIMA, Ryo, Tokyo 105-5128 (JP)
(74) Representative: Grünecker Patent- und Rechtsanwälte PartG mbB
(86) International application number: PCT/JP2024/027512
(87) International publication number: WO 2025/047272

(57) **Abstract**

The control valve (100) has four-positions: the neutral position; the first switching position; the second switching position; and the third switching position which is a position at which the main spool (170) is further stroked from the second switching position and at which the first actuator port (125a) and the first tank port (128a) are communicated and the second actuator port (125b) and the second tank port (128b) are communicated, the main spool (170) has the notches (193) capable of establishing communication between the second actuator port (125b) and the second tank port (128b) at the third switching position as the main spool (170) is moved, and the second spacer (20b) having the insertion hole (21b) through which the main spool (170) is inserted is attached to the valve body (10) on the notch (193) side.

## Description

### TECHNICAL FIELD

The present invention relates to a control valve.

### BACKGROUND ART

JP2000-110956A discloses a direction switching valve that includes: a valve housing; a main spool hole that is formed in the valve housing; a spool that is slidably incorporated into the main spool hole; a supply passage that communicates with the main spool hole; a return passage that communicates with a tank and that communicates with the main spool hole at both end portion sides of the valve housing; and a pair of actuator passages that communicate with the main spool hole between the supply passage and the return passage. In the direction switching valve, when the spool is positioned at a neutral position, the pair of actuator passages are shut off from the supply passage and the return passage, and when the spool is moved in one direction from the neutral position, one of the actuator passages is communicated with the return passage and the other of the actuator passages is communicated with the supply passage, thereby causing an actuator to be operated. When the spool is moved in the other direction from the neutral position, the other of the actuator passages is communicated with the return passage and the one of the actuator passages is communicated with the supply passage, thereby causing the actuator to be operated in the reverse direction. As described above, the direction switching valve is of a three-position type.

### SUMMARY OF INVENTION

Dozer devices and the like may be equipped with a float function for leveling the ground by the blade's own weight. The float function is realized by communicating each of the pair of actuator passages with a tank. In a case in which the float function is to be added to the direction switching valve of the three-position type described in JP2000-110956A, the valve needs to be changed to that of a four-position type with an additional position at which each of the pair of actuator passages is communicated with the tank. In such a case, because passage configurations of the valve housing must be changed, it is necessary to manufacture a valve housing dedicated to the four-position type, resulting in increased manufacturing costs.

An object of the present invention is to easily manufacture a four-position type control valve having a float function.

According to one aspect of the present invention, a control valve for controlling a flow of a hydraulic fluid supplied from a fluid pressure pump to an actuator is provided. The control valve includes: a spool movable in an axial direction; and a valve body having an accommodation hole in which the spool is slidably accommodated, wherein the valve body has: first and second supply ports configured to open to the accommodation hole and into which the hydraulic fluid discharged from the fluid pressure pump is guided; a first tank port configured to open to the accommodation hole on an outer side of the first supply port; a second tank port configured to open to the accommodation hole on an outer side of the second supply port; a first actuator port configured to open to the accommodation hole between the first supply port and the first tank port, the first actuator port being configured to communicate with the actuator; and a second actuator port configured to open to the accommodation hole between the second supply port and the second tank port, the second actuator port being configured to communicate with the actuator, the control valve has four positions: a neutral position at which the first actuator port is blocked from the first supply port and the first tank port, and the second actuator port is blocked from the second supply port and the second tank port; a first switching position which is a position at which the spool is stroked in one direction from the neutral position and at which the first actuator port and the first supply port are communicated and the second actuator port and the second tank port are communicated; a second switching position which is a position at which the spool is stroked in other direction from the neutral position and at which the first actuator port and the first tank port are communicated and the second actuator port and the second supply port are communicated; and a third switching position which is a position at which the spool is further stroked from the second switching position and at which the first actuator port and the first tank port are communicated and the second actuator port and the second tank port are communicated, the spool has a discharge groove capable of establishing communication between the second actuator port and the second tank port at the third switching position as the spool is moved, and wherein a spacer having an insertion hole through which the spool is inserted is attached to the valve body on the discharge groove side.

### BRIEF DESCRIPTION OF DRAWINGS

[FIG. 1] FIG. 1 is a sectional view showing a control valve according to an embodiment of the present invention and shows a state in which a main spool is positioned at a neutral position.
[FIG. 2] FIG. 2 is a sectional view showing the control valve according to the embodiment of the present invention and shows a state in which the main spool is positioned at a first switching position.
[FIG. 3] FIG. 3 is a sectional view showing the control valve according to the embodiment of the present invention and shows a state in which the main spool is positioned at a second switching position.
[FIG. 4] FIG. 4 is a sectional view showing the control valve according to the embodiment of the present invention and shows a state in which the main spool is positioned at a third switching position.

### DESCRIPTION OF EMBODIMENTS

A control valve according to an embodiment of the present invention will be described with reference to the drawings. The control valve is mounted on work machines such as construction machinery, industrial machinery, agricultural machinery, and so forth equipped with a traveling device. In this embodiment, a control valve 100 mounted on a hydraulic shovel as the work machine will be described as an example. The control valve 100 is used to drive an actuator of the hydraulic shovel. Although an example in which working oil is used as a hydraulic fluid for driving the actuator will be described, other fluids such as hydraulic water, etc. may also be used as the hydraulic fluid.

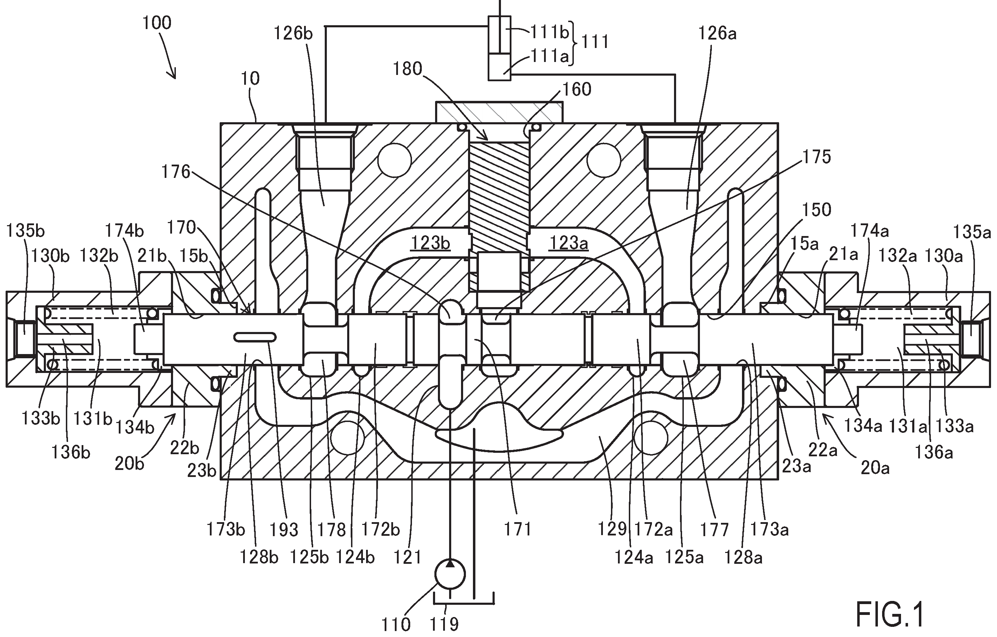

Although not shown, the hydraulic shovel includes a traveling unit, a dozer device that is provided on the traveling unit, a swing unit that is rotatably provided on an upper part of the traveling unit, and a digging unit that is provided on the swing unit. The traveling unit has a crawler, and the hydraulic shovel travels by driving the crawler by a traveling motor. The digging unit includes a boom that is rotatably attached to the swing unit, an arm that is rotatably attached to the boom, and a bucket that is rotatably attached to the arm. The dozer device has a blade capable of contacting the ground and a blade cylinder 111 serving as the actuator that raises and lowers the blade (see FIG. 1). In this embodiment, the control valve 100 is used to control the operation of the blade cylinder 111.

The hydraulic shovel includes: an engine (not shown); a pump 110 serving as a fluid pressure pump that is driven by the engine to discharge the working oil; the control valve 100 that controls the flow of the working oil supplied from the pump 110 to the blade cylinder 111; and a tank 119 into which the working oil returns from the control valve 100.

The control valve 100 will be described in detail with reference to FIG. 1. As shown in FIG. 1, the control valve 100 includes: a main spool 170 serving as a spool that is movable in the axial direction; a sub-spool 180 that is moved in the direction orthogonal to the axial direction of the main spool 170; and a valve body 10 in which the main spool 170 and the sub-spool 180 are slidably accommodated.

The valve body 10 will be described first in detail.

The valve body 10 has: a main accommodation hole 150 serving as an accommodation hole in which the main spool 170 is slidably accommodated; and a sub-accommodation hole 160 in which the sub-spool 180 is slidably accommodated. The structure of the valve body 10 is substantially bilaterally symmetrical.

The valve body 10 includes: a pump port 121 that opens to the main accommodation hole 150 and communicates with the pump 110; first and second supply ports 124a and 124b that open to the main accommodation hole 150 and into which the working oil discharged from the pump 110 is guided through the pump port 121; a first tank port 128a that opens to the main accommodation hole 150 on the outer side of the first supply port 124a; a second tank port 128b that opens to the main accommodation hole 150 on the outer side of the second supply port 124b; a first actuator port 125a that opens to the main accommodation hole 150 between the pump port 121 and the first tank port 128a and communicates with the blade cylinder 111; and a second actuator port 125b that opens to the main accommodation hole 150 between the pump port 121 and the second tank port 128b and communicates with the blade cylinder 111. In the main accommodation hole 150, from the right side to the left side in FIG. 1, the first tank port 128a, the first actuator port 125a, the first supply port 124a, the pump port 121, the second supply port 124b, the second actuator port 125b, and the second tank port 128b open in this order.

In addition, the valve body 10 has: a first actuator passage 126a that communicates the first actuator port 125a with an anti-rod side chamber 111a of the blade cylinder 111; a second actuator passage 126b that communicates the second actuator port 125b with a rod side chamber 111b of the blade cylinder 111; a tank passage 129 that communicates the tank 119 with the first tank port 128a and the second tank port 128b; a first supply passage 123a that communicates the sub-accommodation hole 160 with the first supply port 124a; and a second supply passage 123b that communicates the sub-accommodation hole 160 with the second supply port 124b.

The first and second actuator passages 126a and 126b open to an outer circumferential surface of the valve body 10 and communicate with the anti-rod side chamber 111a and the rod side chamber 111b of the blade cylinder 111 through piping (not shown), respectively. The tank passage 129 is formed to have a U-shape in the sectional view shown in FIG. 1, and the first and second tank ports 128a, 128b respectively open near both end portions in the axial direction of the main accommodation hole 150.

The sub-accommodation hole 160 and the first and second supply passages 123a and 123b constitute a so-called bridge passage. When the working oil is guided to the lower end side of the sub-spool 180 and the pressure becomes high, the sub-spool 180 is opened, and the sub-accommodation hole 160 communicates with the first and second supply passages 123a and 123b. As a result, the working oil is guided to the first and second supply passages 123a and 123b.

The valve body 10 is attached with a first spacer 20a having an insertion hole 21a through which the main spool 170 is inserted and a second spacer 20b having an insertion hole 21b through which the main spool 170 is inserted. The first and second spacers 20a and 20b have the same shape and are symmetrically attached to opposing outer circumferential surfaces of the valve body 10 so that the insertion holes 21a and 21b communicate with the main accommodation hole 150. In the following, the second spacer 20b will be described, and for the first spacer 20a, the components that are the same as those of the second spacer 20b are shown with the suffix "a" in the reference numerals and their description will be omitted.

The second spacer 20b has an annular main body portion 22b that is provided in contact with the valve body 10 and a spigot portion 23b that is formed to have a smaller diameter than the main body portion 22b and that is fitted into the valve body 10. In this embodiment, the insertion hole 21b is formed coaxially with the main accommodation hole 150, and has the inner diameter slightly larger than the inner diameter of the main accommodation hole 150. The second spacer 20b is attached to the valve body 10 by fitting the spigot portion 23b into a mounting recess 15b that is formed on the outer circumferential surface of the valve body 10 so as to have a larger diameter than the main accommodation hole 150. With such a configuration, it is easy to ensure the coaxiality of the insertion hole 21b with respect to the main accommodation hole 150 of the valve body 10. The functions of the first and second spacers 20a and 20b will be described later.

In addition, the control valve 100 includes: a first pilot cap 130a having a first pilot chamber 131a into which the pilot pressure acting on one end of the main spool 170 is guided; and a second pilot cap 130b having a second pilot chamber 131b into which the pilot pressure acting on the other end of the main spool 170 is guided. The first and second pilot caps 130a and 130b have similar shapes and are attached to the valve body 10 by bolts or the like. In other words, the first and second pilot caps 130a and 130b are attached to the valve body 10 in a symmetrical manner via the spacers 20a and 20b. In the following, the second pilot cap 130b will be described, and for the first pilot cap 130a, the components that are the same as those of the second pilot cap 130b are shown with the suffix "a" in the reference numerals and their description will be omitted.

The second pilot cap 130b has a pilot port 135b that guides the pilot pressure from the outside to the second pilot chamber 131b. The second pilot chamber 131b includes: a spring 132b that biases the main spool 170 in the axial direction; a position defining portion 133b that defines the position of the stroke end of the main spool 170; and a seat portion 134b that is provided between the spring 132b and the main spool 170. The spring 132b is provided in a compressed state between the position defining portion 133b and the seat portion 134b, and biases the main spool 170 such that the main spool 170 is positioned at the neutral position, which will be described later. The position defining portion 133b is provided on the pilot port 135b side in the second pilot chamber 131b, and contacts with the main spool 170 when the main spool 170 is moved to the stroke end. A communicating passage 136b that communicates the pilot port 135b with the second pilot chamber 131b is formed in the position defining portion 133b, and the pilot pressure is guided from the outside to the second pilot chamber 131b through the pilot port 135b and the communicating passage 136b.

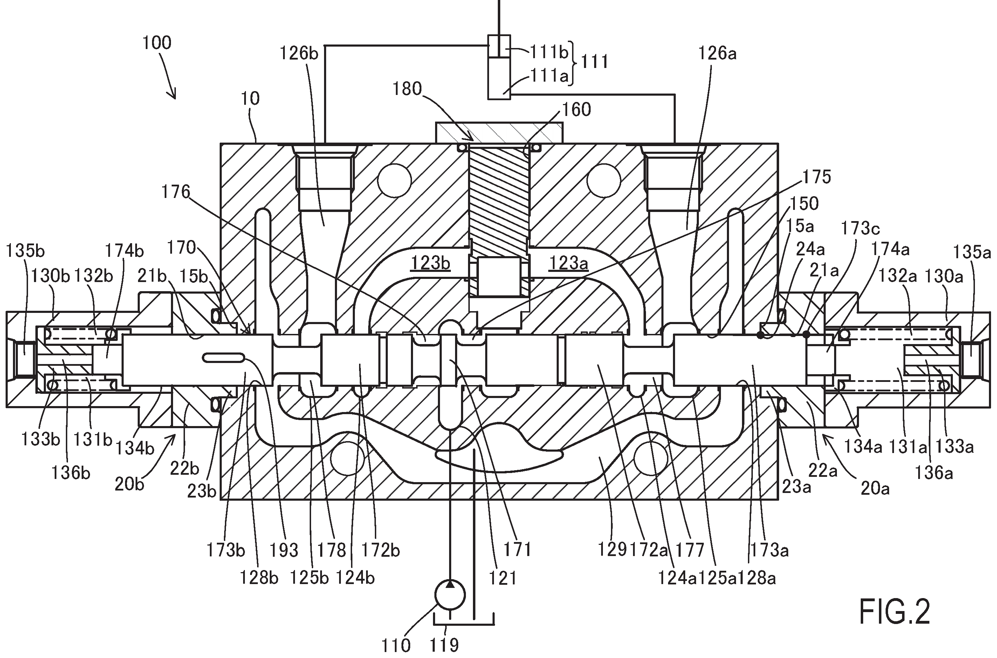

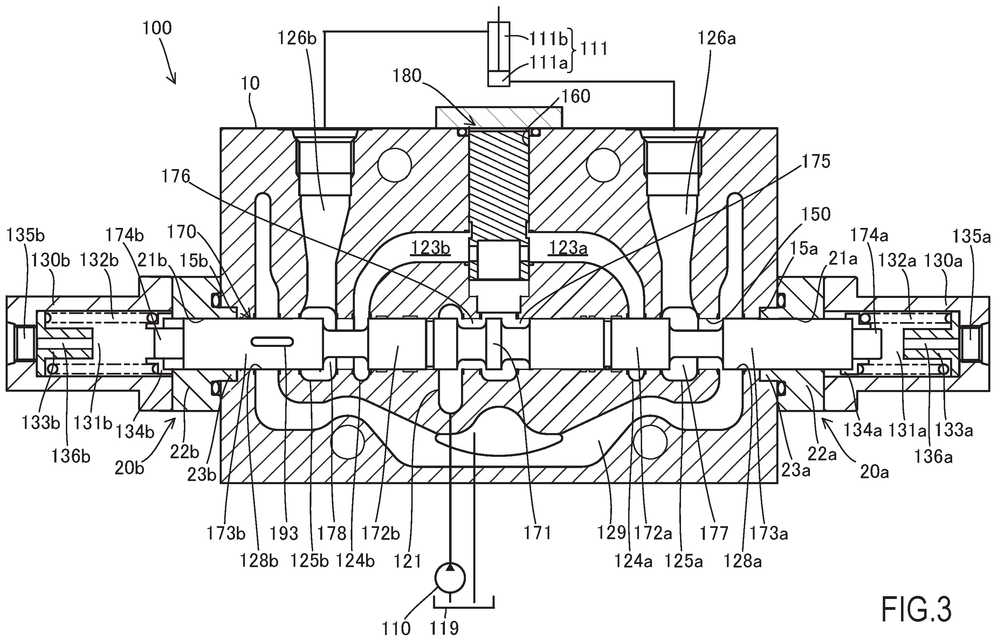

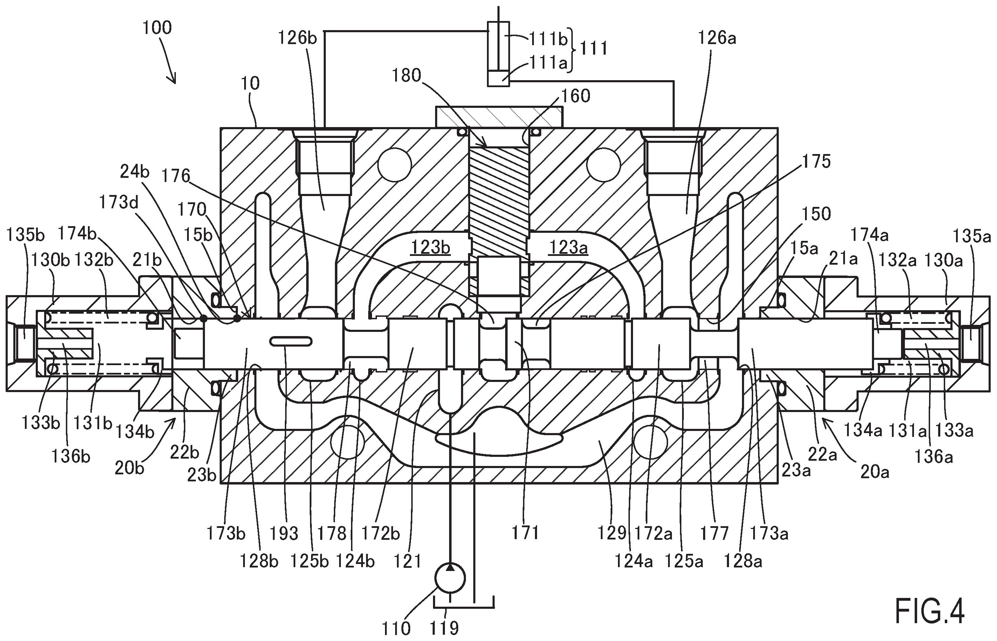

The control valve 100 is a control valve of a four-position type. Specifically, the control valve 100 has: the neutral position at which the pilot pressure is not acting on the first and second pilot chambers 131a and 131b (the state shown in FIG. 1); a first switching position at which the pilot pressure has been guided to the first pilot chamber 131a and the main spool 170 has stroked from the neutral position to one direction (the left side in FIG. 1) (the state shown in FIG. 2); a second switching position at which the pilot pressure has been guided to the second pilot chamber 131b and the main spool 170 has stroked from the neutral position to the other direction (the right side in FIG. 1) (the state shown in FIG. 3); and a third switching position at which even greater pilot pressure has been guided to the second pilot chamber 131b and the main spool 170 has stroked further from the second switching position (the state shown in FIG. 4).

The blade cylinder 111 is driven by supplying the working oil to the anti-rod side chamber 111a or the rod side chamber 111b through the first and second actuator passage 126a or 126b in accordance with the position of the main spool 170. The operation of the control valve 100 and the flow of the working oil will be described later.

Next, the main spool 170 will be described in detail.

The main spool 170 has a plurality of cylindrical land portions with uniform outer diameters that are in sliding contact with an inner circumferential surface of the main accommodation hole 150. Specifically, the main spool 170 has: a supply-side land portion 171 that is provided near the center in the axial direction of the main spool 170; first and second outlet-side land portions 172a and 172b that are respectively provided on the left and right sides of the supply-side land portion 171; and first and second tank-side land portions 173a and 173b that are respectively provided on the outer sides of the first and second outlet-side land portions 172a and 172b. The second tank-side land portion 173b serves as a "land portion" in Scope of Claims. The first tank-side land portion 173a, the first outlet-side land portion 172a, the supply-side land portion 171, the second outlet-side land portion 172b, and the second tank-side land portion 173b are provided on the main spool 170 by being arranged in this order from the right side to the left side in FIG. 1.

The supply-side land portion 171 can block the communication between the pump port 121 and the sub-accommodation hole 160 by its outer circumferential surface. The first outlet-side land portion 172a can block the communication between the first supply port 124a and the first actuator port 125a by its outer circumferential surface, and the second outlet-side land portion 172b can block the communication between the second supply port 124b and the second actuator port 125b by its outer circumferential surface. The first tank-side land portion 173a can block the communication between the first actuator port 125a and the first tank port 128a by its outer circumferential surface, and the second tank-side land portion 173b can block the communication between the second actuator port 125b and the second tank port 128b by its outer circumferential surface. The first and second tank-side land portions 173a and 173b are exposed from the main accommodation hole 150, and parts thereof slide in the main accommodation hole 150.

An end portion of the main spool 170 on the first pilot cap 130a side is formed with a first small-diameter portion 174a that is formed continuously with the first tank-side land portion 173a and that has a smaller diameter than the first tank-side land portion 173a, and an end portion of the main spool 170 on the second pilot cap 130b side is formed with a second small-diameter portion 174b that is formed continuously with the second tank-side land portion 173b and that has a smaller diameter than the second tank-side land portion 173b. The first and second small-diameter portions 174a and 174b come into contact with a position defining portion 133a and the position defining portion 133b, respectively, to define the stroke ends of the main spool 170.

Annular grooves are respectively provided between land portions. A first annular groove 175 is provided between the supply-side land portion 171 and the first outlet-side land portion 172a, and a second annular groove 176 is provided between the supply-side land portion 171 and the second outlet-side land portion 172b. A third annular groove 177 is provided between the first outlet-side land portion 172a and the first tank-side land portion 173a, and a fourth annular groove 178 is provided between the second outlet-side land portion 172b and the second tank-side land portion 173b.

The main spool 170 has notches 193 each serving as a discharge groove that is formed in the second tank-side land portion 173b.

The notches 193 are provided in an outer circumferential surface of the second tank-side land portion 173b so as to extend in the axial direction of the main spool 170, and the plurality of notches 193 are provided at equal intervals in the circumferential direction. In this embodiment, four notches 193 are provided in the outer circumferential surface of the second tank-side land portion 173b. As shown in FIG. 1, in a state in which the main spool 170 is positioned at the neutral position, the notches 193 communicate with the second tank port 128b and do not communicate with the second actuator port 125b adjacent to the second tank port 128b. In addition, in a state in which the main spool 170 has stroked to the left side in FIG. 1 and the main spool 170 is positioned at the first switching position (see FIG. 2), the notches 193 do not communicate with the second pilot chamber 131b of the second pilot cap 130b, and parts of the notches 193 are positioned in the insertion hole 21b of the second spacer 20b. Note that the number of notches 193 is not limited to four as described above, and only one notch 193 may be provided. In addition, instead of providing the notches 193, it may be possible to provide an annular groove that is formed over the entire outer circumferential surface of the main spool 170.

Next, the operation of the control valve 100 according to this embodiment will be described with reference to FIGs. 1 to 4.

When an operator of the hydraulic shovel operates a blade operation lever (not shown) provided in an operator's seat of the hydraulic shovel to raise and lower the blade for leveling the ground, for example, the pilot pressure as an operation command is output to the first pilot chamber 131a or the second pilot chamber 131b of the control valve 100. As a result, the main spool 170 strokes, and the working oil is supplied to the anti-rod side chamber 111a or the rod side chamber 111b of the blade cylinder 111, and thereby, the blade cylinder 111 is extended and contracted, and the blade is raised and lowered.

When the blade operation lever is held at the neutral position, as shown in FIG. 1, the main spool 170 is held at the neutral position. In a state in which the main spool 170 is positioned at the neutral position, the communication between the pump port 121 and the sub-accommodation hole 160 is blocked by the outer circumferential surface of the supply-side land portion 171. In addition, the communication between the first actuator port 125a and the first tank port 128a is blocked by the outer circumferential surface of the first tank-side land portion 173a, and the communication between the second actuator port 125b and the second tank port 128b is blocked by the outer circumferential surface of the second tank-side land portion 173b. In addition, the communication between the first supply port 124a and the first actuator port 125a is blocked by the outer circumferential surface of the first outlet-side land portion 172a, and the communication between the second supply port 124b and the second actuator port 125b is blocked by the outer circumferential surface of the second outlet-side land portion 172b. In other words, in a state in which the main spool 170 is positioned at the neutral position, the anti-rod side chamber 111a and the rod side chamber 111b do not communicate with either the pump 110 or the tank 119.

When the blade operation lever is operated so that the blade is raised, the pilot pressure is guided to the first pilot chamber 131a. As a result, the main spool 170 strokes to the left side in FIG. 2 to reach the first switching position shown in FIG. 2. FIG. 2 shows a state in which the main spool 170 has stroked to the stroke end, and the second small-diameter portion 174b has come to contact with the position defining portion 133b of the second pilot cap 130b. At the first switching position, the pump port 121 and the sub-accommodation hole 160 are communicated through the first annular groove 175, and the working oil from the pump port 121 is guided to the sub-accommodation hole 160.

When the working oil is guided to the sub-accommodation hole 160, the sub-spool 180 is opened by the pressure in the sub-accommodation hole 160, and the working oil is guided from the sub-accommodation hole 160 to the first and second supply passages 123a and 123b. When the main spool 170 is positioned at the first switching position, the first supply port 124a and the first actuator port 125a are communicated through the third annular groove 177. Thus, the working oil that has been guided by the first supply passage 123a is then guided to the first actuator passage 126a through the first supply port 124a, the third annular groove 177, and the first actuator port 125a. The working oil that has been guided to the first actuator passage 126a is supplied to the anti-rod side chamber 111a.

In addition, when the main spool 170 is positioned at the first switching position, the second actuator port 125b and the second tank port 128b are communicated through the fourth annular groove 178. Thus, the working oil is discharged to the tank passage 129 from the rod side chamber 111b of the blade cylinder 111 through the second actuator passage 126b, the second actuator port 125b, the fourth annular groove 178, and the second tank port 128b. As a result, the blade cylinder 111 is extended and the blade is raised. Thus, when the leveling of the ground by the blade is not performed, it is possible to allow the hydraulic shovel to travel without causing the blade to come into contact with the ground.

In addition, when the blade operation lever is operated so that the blade is lowered, the pilot pressure is guided to the second pilot chamber 131b. As a result, the main spool 170 strokes to the right side in FIG. 3 to reach the second switching position shown in FIG. 3. At the second switching position, the main spool 170 has not stroked to the stroke end, and a gap is formed between the first small-diameter portion 174a of the main spool 170 and the position defining portion 133a of the first pilot cap 130a. In this state, the pump port 121 and the sub-accommodation hole 160 are communicated through the second annular groove 176, and the working oil from the pump port 121 is guided to the sub-accommodation hole 160. Then, the sub-spool 180 is opened, and the working oil is guided from the sub-accommodation hole 160 to the first and second supply passages 123a and 123b. When the main spool 170 is positioned at the second switching position, the second supply port 124b and the second actuator port 125b are communicated through the fourth annular groove 178. Thus, the working oil that has been guided to the second supply passage 123b is then guided to the second actuator passage 126b through the second supply port 124b, the fourth annular groove 178, and the second actuator port 125b. The working oil that has been guided to the second actuator passage 126b is supplied to the rod side chamber 111b of the blade cylinder 111.

In addition, when the main spool 170 is positioned at the second switching position, the first actuator port 125a and the first tank port 128a are communicated through the third annular groove 177. Thus, the working oil is discharged to the tank 119 from the rod side chamber 111b of the blade cylinder 111 through the second actuator passage 126b, the second actuator port 125b, the fourth annular groove 178, the second tank port 128b, and the tank passage 129. As a result, the blade cylinder 111 is contracted and the blade is lowered. Thus, it is possible to level the ground by lowering the blade and pressing the blade against the ground by using the pressure of the working oil.

In addition, in this embodiment, a float function for leveling the ground by the blade's own weight is provided on the control valve 100. When the blade operation lever is operated so as to perform the float function, the pilot pressure that is higher than the pilot pressure when the main spool 170 is positioned at the second switching position is guided to the second pilot chamber 131b. As a result, the main spool 170 further strokes to the right side in FIG. 4 from the second switching position to reach the third switching position shown in FIG. 4. At the third switching position, the main spool 170 strokes to the stroke end, and the first small-diameter portion 174a comes to contact with the position defining portion 133a of the first pilot cap 130a. In this state, the communication between the pump port 121 and the sub-accommodation hole 160 is blocked, and the communication between the first supply port 124a and the first actuator port 125a, and the communication between the second supply port 124b and the second actuator port 125b are blocked. In other words, when the main spool 170 is positioned at the third switching position, the anti-rod side chamber 111a and the rod side chamber 111b do not communicate with the pump 110.

On the other hand, when the main spool 170 is positioned at the third switching position, the first actuator port 125a and the first tank port 128a are communicated through the third annular groove 177 of the main spool 170. In addition, because the notches 193 communicate not only with the second tank port 128b but also with the second actuator port 125b, the second actuator port 125b and the second tank port 128b are communicated through the notches 193 of the main spool 170. Thus, the rod side chamber 111b communicates with the tank 119 through the second actuator passage 126b, the second actuator port 125b, the notches 193, the second tank port 128b, and the tank passage 129. In addition, the anti-rod side chamber 111a of the blade cylinder 111 communicates with the tank 119 through the first actuator passage 126a, the first actuator port 125a, the third annular groove 177, the first tank port 128a, and the tank passage 129. As a result, the anti-rod side chamber 111a and the rod side chamber 111b communicate with the tank 119 to reach the tank pressure, and the blade cylinder 111 is contracted by the blade's own weight. As a result, the float function is exhibited to allow the blade to move up and down along the shape of the ground, and so, it is possible to perform the leveling of the ground with the blade by following the shape of the ground.

As described above, in addition to the neutral position, the first switching position, and the second switching position of the three-position type control valve, the control valve 100 according to this embodiment is a four-position type control valve having the additional third switching position, in which both of the anti-rod side chamber 111a and the rod side chamber 111b of the blade cylinder 111 communicate with the tank 119 by the notches 193 formed in the main spool 170. In other words, by changing the configuration of the three-position type control valve to the configuration in which the main spool 170 has the notches 193, it is possible to add the third switching position that is used for the float function without changing the passage configuration of the valve body 10 from that of the three-position type. This makes it possible to obtain the four-position type control valve 100. In other words, in the control valve 100 of this embodiment, there is no need to prepare a valve body 10 dedicated to the four-position type, and the four-position type valve body 10 can be made common with the three-position type valve body 10.

In addition, by attaching the second spacer 20b to the valve body 10, the main spool 170 can be made longer by an amount corresponding to the axial length of the second spacer 20b. Specifically, by attaching the second spacer 20b on the second tank-side land portion 173b side of the valve body 10, the second tank-side land portion 173b can be made longer than that of the three-position type by an amount corresponding to the axial length of the second spacer 20b, and so, it is possible to secure the area (the axial length) where the notches 193 are to be formed.

As described above, by changing the main spool 170 and by attaching the second spacer 20b to the valve body 10, the valve body 10 of four-position type can be made common with the valve body 10 of three-position type, and so, it is possible to easily manufacture the four-position type control valve 100 having the float function.

In addition, in the control valve 100 of this embodiment, the first spacer 20a is attached on the first tank-side land portion 173a side of the valve body 10, and the first pilot cap 130a is attached to the first spacer 20a by bolts or the like. In other words, similarly to the second pilot cap 130b, the first pilot cap 130a is not directly attached to the valve body 10, but is attached to the valve body 10 via the first spacer 20a by bolts or the like. Thus, in addition to the second spacer 20b, by attaching the first spacer 20a to the valve body 10, the attachment structures of the first pilot cap 130a and the second pilot cap 130b to the valve body 10 can be made common.

In addition, in the control valve 100 of this embodiment, as shown in FIG. 4, when the main spool 170 is positioned at the third switching position, an outer-side end portion 173d of the second tank-side land portion 173b is positioned within the second spacer 20b. In other words, even when the main spool 170 is at its maximum stroke to the right side in FIGs. 1 to 4, the second tank-side land portion 173b does not come off from the second spacer 20b. As a result, when the main spool 170 is moved, the outer-side end portion 173d is prevented from being caught by an opening end portion 24b of the insertion hole 21b of the second spacer 20b. In addition, the first tank-side land portion 173a of the main spool 170 is formed so as to be longer than that of the three-position type, and as shown in FIG. 2, even when the main spool 170 is positioned at the first switching position, an outer-side end portion 173c of the first tank-side land portion 173a is positioned within the first spacer 20a. In other words, even when the main spool 170 is at its maximum stroke to the left side in FIGs. 1 to 4, the first tank-side land portion 173a does not come off from the first spacer 20a. Thus, when the main spool 170 is moved, the outer-side end portion 173c is prevented from being caught by an opening end portion 24a of the insertion hole 21a of the first spacer 20a.

Furthermore, in the control valve 100 of this embodiment, the inner diameter of the insertion hole 21b of the second spacer 20b is larger than the inner diameter of the main accommodation hole 150 of the valve body 10. With such a configuration, when the main spool 170 is moved, the outer-side end portion 173d of the second tank-side land portion 173b is prevented from being caught by an inner circumferential surface of the insertion hole 21b of the second spacer 20b. Similarly, for the first spacer 20a, the outer-side end portion 173c of the first tank-side land portion 173a is prevented from being caught by an inner circumferential surface of the insertion hole 21a of the first spacer 20a.

In addition, in the control valve 100 of this embodiment, because the length of the second tank-side land portion 173b is increased as compared with that of the main spool for the three-position type, the second spacer 20b is provided between the second pilot cap 130b and the valve body 10, and so, there is no need to increase the length of the second pilot cap 130b in the axial direction, and there is no need to prepare a second pilot cap dedicated to the four-position type. Furthermore, in the control valve 100, because the first spacer 20a is provided between the first pilot cap 130a and the valve body 10, the length of the first tank-side land portion 173a is increased as compared with that of the main spool for the three-position type. Therefore, by adjusting the length of the first tank-side land portion 173a without changing the first pilot cap 130a from that of the three-position type, it is possible to define the stroke end of the main spool 170 (in other words, the third switching position) by causing the first small-diameter portion 174a of the main spool 170 to come into contact with the position defining portion 133a of the first pilot cap 130a. In other words, there is no need to prepare the first pilot cap dedicated to the four-position type. Thus, it is possible to make the pilot caps 130a and 130b common with those of the three-position type.

According to the above-described embodiment, the following operational advantages are obtained.

In the control valve 100, when the main spool 170 further strokes from the second switching position, the first actuator port 125a and the first tank port 128a are communicated, and the second actuator port 125b and the second tank port 128b are communicated through the notches 193. In other words, because the main spool 170 has the notches 193, it is possible to adapt the configuration of the passage on the valve body 10 side for the four-position type without making any modification from the three-position type. In addition, because the second spacer 20b is attached to the valve body 10, it is possible to make the main spool 170 longer than that of the three-position type to secure the area where the notches 193 are to be formed. As described above, by changing the main spool 170 and attaching the second spacer 20b to the valve body 10, the four-position type valve body 10 can be made common with the three-position type valve body 10, and so, it is possible to easily manufacture the four-position type control valve 100 having the float function.

The following modifications are also within the scope of the present invention, and it is also possible to combine the configurations shown in the modifications with the configurations described in the above-mentioned embodiments, to combine the configurations described in the different embodiments described above with each other, and to combine the configurations described in the different modifications described below with each other.

### <First Modification>

In the above-mentioned embodiment, the first and second spacers 20a and 20b are attached to the valve body 10. The first spacer 20a allows the attachment structure of the pilot caps 130a and 130b to the valve body 10 to be made common and allows the stroke end of the main spool 170 (the third switching position) to be defined without changing the first pilot cap 130a from that of the three-position type. However, when there is no need to make the attachment structure of the pilot caps 130a and 130b to the valve body 10 common, or when the stroke end of the main spool 170 is defined by, for example, lengthening the first pilot cap 130a in the axial direction, the first spacer 20a is not essential.

### <Second Modification>

In the above-mentioned embodiment, the control valve 100 includes the first pilot cap 130a having the first pilot chamber 131a and the second pilot cap 130b having the second pilot chamber 131b. However, instead of the configuration in which the main spool 170 is moved by the pilot pressure, for example, the configuration in which the main spool 170 is moved by operating a link mechanism provided at the end portion of the main spool 170 may also be employed. In such a case, the first and second pilot caps 130a and 130b are not essential components of the control valve 100.

### <Third Modification>

In the above-mentioned embodiment, when the main spool 170 is positioned at the third switching position, the outer-side end portion 173d of the second tank-side land portion 173b is positioned within the second spacer 20b. However, if there is no risk of the outer-side end portion 173d being caught by the opening end portion 24b of the insertion hole 21b of the second spacer 20b when the main spool 170 is moved (see FIG. 4), the above-described configuration is not essential. In addition, in the above-mentioned embodiment, although the inner diameter of the insertion hole 21b of the second spacer 20b is larger than the inner diameter of the main accommodation hole 150 of the valve body 10, if there is no risk of the outer-side end portion 173d being caught by the inner circumferential surface of the insertion hole 21b when the main spool 170 is moved, the above-described configuration is not essential. In other words, the inner diameter of the insertion hole 21b of the second spacer 20b may be formed to have the same diameter as the inner diameter of the main accommodation hole 150 of the valve body 10, and the main spool 170 may slide on the inner circumferential surface of the insertion hole 21b.

### <Fourth Modification>

In the above-mentioned embodiment, the spacers 20a and 20b respectively have the main body portions 22a and 22b that are provided in contact with the valve body 10 and the spigot portions 23a and 23b that are respectively formed to have a smaller diameter than the main body portions 22a and 22b and fitted into the valve body 10. However, as long as the coaxiality of the insertion holes 21a and 21b of the spacers 20a and 20b with respect to the main accommodation hole 150 of the valve body 10 can be secured, the spacers 20a and 20b may be attached to the valve body 10 without the spigot portions 23a and 23b.

The configurations, operations, and effects of the embodiments of the present invention configured as described above will be collectively described.

The control valve 100 configured to control the flow of the hydraulic fluid supplied from the fluid pressure pump 110 to the blade cylinder 111, serving as the actuator, includes: the main spool 170 serving as the spool movable in the axial direction; and the valve body 10 having the main accommodation hole 150 serving as the accommodation hole in which the main spool 170 is slidably accommodated, wherein the valve body 10 has: the first and second supply ports 124a and 124b configured to open to the main accommodation hole 150 and into which the hydraulic fluid discharged from the fluid pressure pump 110 is guided; the first tank port 128a configured to open to the main accommodation hole 150 on the outer side of the first supply port 124a; the second tank port 128b configured to open to the main accommodation hole 150 on the outer side of the second supply port 124b; the first actuator port 125a configured to open to the main accommodation hole 150 between the first supply port 124a and the first tank port 128a, the first actuator port 125a being configured to communicate with the blade cylinder 111; and the second actuator port 125b configured to open to the main accommodation hole 150 between the second supply port 124b and the second tank port 128b, the second actuator port 125b being configured to communicate with the blade cylinder 111, the control valve 100 has four positions: the neutral position at which the first actuator port 125a is blocked from the first supply port 124a and the first tank port 128a and the second actuator port 125b is blocked from the second supply port 124b and the second tank port 128b; the first switching position which is a position at which the main spool 170 is stroked in one direction from the neutral position and at which the first supply port 124a and the first actuator port 125a are communicated and the second actuator port 125b and the second tank port 128b are communicated; the second switching position which is a position at which the main spool 170 is stroked in the other direction from the neutral position and at which the first actuator port 125a and the first tank port 128a are communicated and the second actuator port 125b and the second supply port 124b are communicated ; and the third switching position which is a position at which the main spool 170 is further stroked from the second switching position and at which the first actuator port 125a and the first tank port 128a are communicated and the second actuator port 125b and the second tank port 128b are communicated, the main spool 170 has the notches 193 capable of establishing communication between the second actuator port 125b and the second tank port 128b at the third switching position as the main spool 170 is moved, and the second spacer 20b serving as the spacer having the insertion hole 21b through which the main spool 170 is inserted is attached to the valve body 10 on the notches 193 side.

With this configuration, when the main spool 170 further strokes from the second switching position, the first actuator port 125a and the first tank port 128a are communicated, and the second actuator port 125b and the second tank port 128b are communicated through the notches 193. In other words, because the main spool 170 has the notches 193, it is possible to adapt the configuration of the passage on the valve body 10 side for the four-position type without making any modification from the three-position type. In addition, because the second spacer 20b is attached on the notch 193 side of the valve body 10, it is possible to make the main spool 170 longer than that of the three-position type to secure the area where the notches 193 are to be formed. As described above, by changing the main spool 170 and attaching the second spacer 20b to the valve body 10, the four-position type valve body 10 can be made common with the three-position type valve body 10, and so, it is possible to easily manufacture the four-position type control valve 100 having the float function.

In the control valve 100, the main spool 170 has the second tank-side land portion 173b serving as the land portion with a uniform outer diameter, a part of the second tank-side land portion 173b being configured to slide in the main accommodation hole 150 of the valve body 10, the second tank-side land portion 173b being formed with the notches 193, and when the main spool 170 is positioned at the third switching position, the outer-side end portion 173d of the second tank-side land portion 173b is positioned within the second spacer 20b.

With this configuration, when the main spool 170 slides, the outer-side end portion 173d of the second tank-side land portion 173b is prevented from being caught by the opening end portion 24b of the insertion hole 21b of the second spacer 20b.

In the control valve 100, the inner diameter of the insertion hole 21b of the second spacer 20b is larger than the inner diameter of the main accommodation hole 150 of the valve body 10.

With this configuration, the outer-side end portion 173d of the second tank-side land portion 173b is prevented from being caught by the inner circumferential surface of the insertion hole 21b of the second spacer 20b when the main spool 170 slides.

In the control valve 100, the second spacer 20b has: the main body portion 22b provided in contact with the valve body 10; and the spigot portion 23b formed to have a smaller diameter than the main body portion 22b, the spigot portion 23b being fitted into the valve body 10.

With this configuration, it is easy to ensure the coaxiality of the insertion hole 21b of the second spacer 20b with respect to the main accommodation hole 150 of the valve body 10.

The control valve 100 further includes the second pilot cap 130b serving as the pilot cap having the pilot chamber 131b into which the pilot pressure acting on the main spool 170 is guided, wherein the second pilot cap 130b is attached to the valve body 10 via the second spacer 20b.

With this configuration, it is possible to make the second pilot cap 130b common with that of the three-position type.

Embodiments of this invention were described above, but the above embodiments are merely examples of applications of this invention, and the technical scope of this invention is not limited to the specific constitutions of the above embodiments.

This application claims priority based on Japanese Patent Application No.2023-140834 filed with the Japan Patent Office on August 31, 2023, the entire contents of which are incorporated into this specification.

## Claims

1. A control valve for controlling a flow of a hydraulic fluid supplied from a fluid pressure pump to an actuator, the control valve comprising:
a spool movable in an axial direction; and
a valve body having an accommodation hole in which the spool is slidably accommodated, wherein
the valve body has:
first and second supply ports configured to open to the accommodation hole and into which the hydraulic fluid discharged from the fluid pressure pump is guided;
a first tank port configured to open to the accommodation hole on an outer side of the first supply port;
a second tank port configured to open to the accommodation hole on an outer side of the second supply port;
a first actuator port configured to open to the accommodation hole between the first supply port and the first tank port, the first actuator port being configured to communicate with the actuator; and
a second actuator port configured to open to the accommodation hole between the second supply port and the second tank port, the second actuator port being configured to communicate with the actuator,
the control valve has four positions:
a neutral position at which the first actuator port is blocked from the first supply port and the first tank port, and the second actuator port is blocked from the second supply port and the second tank port;
a first switching position which is a position at which the spool is stroked in one direction from the neutral position and at which the first actuator port and the first supply port are communicated and the second actuator port and the second tank port are communicated;
a second switching position which is a position at which the spool is stroked in other direction from the neutral position and at which the first actuator port and the first tank port are communicated and the second actuator port and the second supply port are communicated; and
a third switching position which is a position at which the spool is further stroked from the second switching position and at which the first actuator port and the first tank port are communicated and the second actuator port and the second tank port are communicated,
the spool has a discharge groove capable of establishing communication between the second actuator port and the second tank port at the third switching position as the spool is moved, and wherein
a spacer having an insertion hole through which the spool is inserted is attached to the valve body on the discharge groove side.

2. The control valve according to claim 1 wherein
the spool has a land portion with a uniform outer diameter, a part of the land portion being configured to slide in the accommodation hole of the valve body, the land portion being formed with the discharge groove, and
when the spool is positioned at the third switching position, an outer-side end portion of the land portion is positioned within the spacer.

3. The control valve according to claim 1 wherein
an inner diameter of the insertion hole of the spacer is larger than an inner diameter of the accommodation hole of the valve body.

4. The control valve according to claim 1 wherein
the spacer has:
a main body portion provided in contact with the valve body;
a spigot portion formed to have a smaller diameter than the main body portion, the spigot portion being fitted into the valve body.

5. The control valve according to claim 1, further comprising
a pilot cap having a pilot chamber into which pilot pressure acting on the spool is guided, wherein
the pilot cap is attached to the valve body via the spacer.
